# FASCICULE DE BREVET EUROPEEN

(11) **EP 2 992 657 B1**
(45) Date de publication et mention de la délivrance du brevet: **18.09.2019**
(21) Numéro de dépôt: 14722282.2
(22) Date de dépôt: 17.04.2014
(51) Int. Cl.: H04L 29/06, H04N 21/63

(54) **PROCÉDÉ ET DISPOSITIF POUR CONTRÔLER L'UTILISATION D'UN FLUX DE DONNÉES D'UNE COMMUNICATION**
VERFAHREN UND EINRICHTUNG ZUR STEUERUNG EINES KOMMUNIKATIONSDATENFLUSSES
METHOD AND DEVICE FOR CONTROLLING THE USE OF A COMMUNICATION DATA FLOW

(30) Priorité: 03.05.2013 FR 1354097
(43) Date de publication de la demande: 09.03.2016
(73) Titulaire: Orange, 75015 Paris (FR)
(72) Inventeur: BOUVET, Bertrand, F-22700 Perros Guirec (FR); SALOU, Catherine, F-22300 Lannion (FR)
(86) Numéro de dépôt international: PCT/FR2014/050935
(87) Numéro de publication internationale: WO 2014/177788

(56) Documents cités:
- EP-A1- 2 175 607
- US-A1- 2008 162 641
- US-A1- 2010 185 956

## Description

L'invention se situe dans le domaine de la protection des contenus multimédia.

L'invention concerne la protection des contenus de type audio, image, vidéo transmis par un équipement de type terminal ou serveur lorsque l'équipement est en communication avec un terminal destinataire.

L'invention concerne notamment la protection des contenus multimédia destinés à être transmis par un utilisateur lors d'une communication de ce dernier avec un interlocuteur. Lorsqu'un utilisateur est en communication avec un interlocuteur, l'utilisateur n'a aucun moyen de contrôler ce que son interlocuteur va faire du contenu de la communication. L'interlocuteur peut enregistrer à son insu le flux audio/ vidéo de la communication, puis le modifier ou le transmettre à d'autres interlocuteurs.

L'invention concerne également la protection de contenus multimédia transmis par un serveur en communication avec un terminal destinataire, par exemple pour la transmission d'un contenu multimédia en mode streaming. Une transmission d'un contenu multimédia en mode streaming, bien connue de l'homme du métier, est une transmission progressive du contenu multimédia vers le terminal destinataire. Par exemple, pour un contenu de type vidéo, les images de la vidéo sont reçues et restituées par le terminal destinataire au fur et à mesure de l'avancement temporel dans la vidéo. Le contenu multimédia est transmis en plusieurs paquets, ces paquets après restitution sur le terminal destinataire, pouvant être ou non sauvegardés sur le terminal destinataire.

Les techniques de protection de contenu de type DRM (pour Digital Rights Management, gestion des droits numériques en anglais) sont utilisées par les fournisseurs de contenus pour protéger et donner certains droits à des utilisateurs sur des oeuvres artistiques. Ces techniques utilisent un système de licence qu'un utilisateur doit acquérir afin d'avoir accès à un contenu. Lors du téléchargement du contenu, le terminal doit vérifier auprès d'un serveur de licence si l'utilisateur a effectivement acquis les droits sur le contenu.

Ces techniques ne sont pas adaptées à la protection des contenus générés et transmis au cours d'une communication entre au moins deux interlocuteurs. En effet, préalablement à l'accès au contenu par un des interlocuteurs, l'interlocuteur doit acquérir des droits sur le contenu. Le contenu doit donc déjà exister et être référencé par le serveur de licence.

De plus, ces techniques sont complexes à mettre en oeuvre car elles nécessitent la mise en oeuvre d'un serveur de licence pour gérer les droits sur un contenu et vérifier qu'un utilisateur est autorisé à accéder au contenu.

Le document US 2008/0162641 décrit un système et un procédé pour transmettre un contenu protégé en temps réel entre deux utilisateurs.

L'invention est définie dans les revendications 1 et 8, respectivement. Des modes de réalisation particuliers sont définis dans les revendications dépendantes.

Un des buts de l'invention est d'apporter des améliorations par rapport à l'état de la technique précité.

Elle propose à cet effet un procédé pour contrôler l'utilisation d'un flux de données transmis lors d'une communication établie entre au moins un dispositif émetteur et un terminal destinataire. Au cours d'une phase de négociation des paramètres du flux de données de la communication, le procédé comprend une étape de détermination d'au moins une règle d'utilisation du flux de données de la communication, et une étape d'insertion de la au moins une règle d'utilisation déterminée dans un message de négociation des paramètres du flux de données de la communication, le message étant destiné à être transmis au terminal destinataire.

Corrélativement, l'invention concerne un dispositif pour contrôler l'utilisation d'un flux de données transmis lors d'une communication établie entre au moins le dispositif et un terminal destinataire. Le dispositif comprend des moyens de détermination d'au moins une règle d'utilisation du flux de données de la communication et des moyens d'insertion d'au moins une règle d'utilisation déterminée dans un message de négociation des paramètres du flux de données de la communication, le message étant destiné à être transmis au terminal destinataire, lesdits moyens de détermination et d'insertion étant destinés à être activés au cours d'une négociation des paramètres du flux de données de la communication.

Ainsi, un utilisateur du dispositif émetteur peut contrôler simplement et de manière automatique l'utilisation que peut faire un terminal destinataire des flux de données échangés lors de la communication entre le dispositif émetteur et le terminal destinataire. De tels échanges de flux de données peuvent par exemple avoir lieu dans le cas d'une communication téléphonique ou visiophonique. Dans ce cas, le dispositif émetteur correspond à un terminal de l'utilisateur.

Selon un autre exemple, lorsque le dispositif émetteur est un serveur diffusant en mode streaming un contenu multimédia au terminal destinataire, le procédé selon l'invention permet de donner des droits de gestion du contenu multimédia diffusé au terminal destinataire de manière simple. Dans cet exemple, le flux de données de la communication correspond au contenu multimédia diffusé en mode streaming. Le procédé selon l'invention n'a pas besoin de stocker des droits de gestion du contenu multimédia sur le terminal destinataire ou sur un serveur en association avec un identifiant du terminal destinataire.

L'invention concerne la protection de flux de données relatif à tout type de session de communication temps réel telle que des communications téléphonique, visiophonique, messagerie instantanée, audioconférence, vidéoconférence, tableau blanc, streaming audio ou vidéo, etc.

L'invention vise notamment la protection des données média échangées au cours d'une communication entre un dispositif émetteur et un terminal destinataire, par exemple les données audio, vidéo, texte, image de la communication. L'invention permet de protéger de manière indépendante chaque flux de données d'une communication. Par exemple, pour une communication visiophonique, le flux de données audio et le flux de données vidéo peuvent être protégés selon des règles d'utilisation distinctes.

Les règles d'utilisation du flux de données sont par exemple des actions effectuées au cours de la communication, sur le flux de données reçu telles que lecture du flux, enregistrement local ou externe du flux. Les règles d'utilisation sont également par exemple des actions effectuées sur les données stockées du flux reçu telles que modification, partage, transfert.

Les différents modes ou caractéristiques de réalisation mentionnés ci-après peuvent être ajoutés indépendamment ou en combinaison les uns avec les autres, aux étapes du procédé défini ci-dessus.

Les différents modes ou caractéristiques de réalisation mentionnés ci-après peuvent être ajoutés indépendamment ou en combinaison les uns avec les autres, aux caractéristiques du dispositif défini ci-dessus.

Selon un mode particulier de réalisation de l'invention, la règle d'utilisation est déterminée en fonction du terminal destinataire ou de l'utilisateur du terminal destinataire.

Ainsi, différentes règles d'utilisation du flux de données peuvent être définies en fonction des destinataires de la communication. Ces règles d'utilisation peuvent être déterminées de manière automatique en associant des règles prédéfinies à certains destinataires en fonction de critères prédéterminés : historique de communication avec le destinataire, lien avec le destinataire, type de terminal destinataire, type de communication avec le destinataire, localisation du terminal destinataire, type de connectivité du terminal destinataire (WiFi, 3G,...)...

Par exemple, si le numéro de téléphone du terminal destinataire est présent dans le carnet d'adresse associé au dispositif émetteur, des règles d'utilisation de lecture et d'enregistrement des flux de données peuvent être déterminées. Au contraire, si le numéro de téléphone du terminal destinataire n'est pas présent dans le carnet d'adresse associé au dispositif émetteur, seule la règle d'utilisation de lecture limitée à la durée de la communication en cours, est déterminée.

Les règles d'utilisation peuvent aussi être déterminées manuellement par l'utilisateur du dispositif émetteur en associant par exemple des préférences à certains destinataires enregistrés dans le carnet d'adresse associé au dispositif émetteur.

Selon un autre mode particulier de réalisation de l'invention, la règle d'utilisation est déterminée en fonction d'une adresse ou d'un réseau d'accès utilisé par le terminal destinataire pour joindre le dispositif émetteur afin d'établir la communication.

Ainsi, différentes règles d'utilisation du flux de données peuvent être définies en fonction du réseau de télécommunications utilisé pour établir la communication entre le dispositif émetteur et le terminal destinataire.

Selon un autre mode particulier de réalisation, différentes règles d'utilisation du flux de données peuvent être définies en fonction de l'adresse utilisée par le terminal destinataire pour joindre le dispositif émetteur afin d'établir la communication entre le dispositif émetteur et le terminal destinataire. L'adresse peut par exemple correspondre à un numéro de téléphone auquel le dispositif émetteur est joignable.

Dans le cas où le dispositif émetteur est un serveur, le serveur peut mettre en oeuvre différents types de services tels que streaming de contenus audio ou vidéo, streaming de messages vocaux ou vidéo, ... Selon le numéro utilisé par le terminal destinataire pour joindre le serveur, différents tarifs liés aux services peuvent être appliqués par l'opérateur de télécommunications ou le fournisseur des services. Différentes règles d'utilisations peuvent alors être associées à ces numéros en fonction du tarif appliqué.

Selon un autre mode particulier de réalisation de l'invention, le procédé pour contrôler l'utilisation d'un flux de données transmis lors d'une communication comprend l'insertion d'au moins un paramètre associé à la règle d'utilisation, dans le message de négociation des paramètres du flux de données de la communication.

Ainsi, il est possible de configurer les règles d'utilisation du flux de données de la communication. Par exemple, si la règle d'utilisation correspond à l'enregistrement du flux de données de la communication, un paramètre associé à la règle d'utilisation peut correspondre à un emplacement autorisé de stockage du flux de données enregistré. Cet emplacement peut être une mémoire interne du terminal destinataire, ou une mémoire externe du terminal destinataire reliée à un port de connexion du terminal destinataire ou via un réseau de télécommunications.

Selon un autre exemple, si la règle d'utilisation correspond au partage du flux de données de la communication, la règle d'utilisation est associée à une liste d'au moins un identifiant d'un autre terminal ou d'un utilisateur d'un autre terminal autorisé à accéder au flux de données enregistré.

L'invention concerne également un procédé de communication entre au moins un dispositif émetteur et un terminal destinataire. Le procédé de communication comprend une phase de négociation des paramètres d'un flux de données de la communication au cours de laquelle un message de négociation des paramètres du flux de données est reçu en provenance du dispositif émetteur et une étape d'extraction dans le message de négociation des paramètres du flux de données reçu, d'au moins une règle d'utilisation du flux de données de la communication. Le procédé de communication comprend en outre pendant une phase de communication entre le dispositif émetteur et le terminal destinataire, une étape de traitement du flux de données de la communication selon la règle d'utilisation extraite.

Corrélativement, l'invention concerne aussi un dispositif de communication entre au moins un dispositif émetteur et un terminal destinataire, comprenant des moyens d'extraction dans un message de négociation des paramètres d'un flux de données de la communication reçu en provenance du dispositif émetteur, d'au moins une règle d'utilisation du flux de données de la communication, lesdits moyens d'extraction étant destinés à être activés en cours de négociation des paramètres du flux de données de la communication entre le dispositif émetteur et le terminal destinataire, et des moyens de traitement du flux de données de la communication selon la règle d'utilisation extraite, lesdits moyens de traitement étant destinés à être activés pendant en cours de communication entre le dispositif émetteur et le terminal destinataire.

Ainsi, le flux de données reçu en provenance du dispositif émetteur est protégé vis-à-vis des utilisations que peut faire l'utilisateur du terminal destinataire. Seules les actions autorisées par les règles d'utilisation peuvent être effectuées par le terminal destinataire. Les différents modes ou caractéristiques de réalisation mentionnés ci-après peuvent être ajoutés indépendamment ou en combinaison les uns avec les autres, aux étapes du procédé de communication défini ci-dessus.

Les différents modes ou caractéristiques de réalisation mentionnés ci-après peuvent être ajoutés indépendamment ou en combinaison les uns avec les autres, aux caractéristiques du dispositif de communication défini ci-dessus.

Selon un mode particulier de réalisation de l'invention, le procédé de communication comprend selon la règle d'utilisation extraite, une étape d'enregistrement du flux de données reçu, et une étape d'insertion dans un fichier contenant le flux de données enregistré d'un identifiant relatif au dispositif émetteur ou à l'utilisateur du dispositif émetteur.

Ainsi, lorsque le terminal destinataire est autorisé à enregistrer le flux de données reçu, le dispositif émetteur ou l'utilisateur du dispositif émetteur du flux de données qui a été reçu et enregistré peut être identifié.

Selon un autre mode particulier de réalisation de l'invention, le procédé de communication comprend selon une première règle d'utilisation extraite, une étape d'enregistrement du flux de données reçu et selon une deuxième règle d'utilisation extraite, une étape d'insertion dans un fichier contenant le flux de données enregistré d'un identifiant relatif à un terminal autorisé ou à l'utilisateur d'un terminal autorisé à accéder au flux de données enregistré.

Ainsi, lorsque le terminal destinataire est autorisé à enregistrer le flux de données reçu, l'accès par d'autres terminaux ou par des utilisateurs d'autres terminaux au flux de données qui a été enregistré est contrôlé par les paramètres de la seconde règle d'utilisation que le dispositif émetteur a positionnés dans le message de négociation de session de communication.

L'invention concerne aussi un terminal comprenant un dispositif pour contrôler l'utilisation d'un flux de données transmis lors d'une communication établie entre au moins un dispositif émetteur et un terminal destinataire, selon l'un quelconque des modes particuliers de réalisation de l'invention décrit ci-dessus.

L'invention concerne aussi un terminal comprenant un dispositif de communication selon l'un quelconque des modes particuliers de réalisation de l'invention décrits ci-dessus.

L'invention concerne aussi un message de négociation de paramètres d'un flux de données transmis lors d'une communication entre au moins un dispositif émetteur et un terminal destinataire du message. Le message comprend au moins une règle d'utilisation du flux de données de la communication.

Les différents modes ou caractéristiques de réalisation mentionnés ci-après peuvent être ajoutés indépendamment ou en combinaison les uns avec les autres, aux caractéristiques du message défini ci-dessus.

Selon un mode particulier de réalisation de l'invention, le message comprend au moins un identifiant relatif au dispositif émetteur ou à l'utilisateur du dispositif émetteur.

Selon un autre mode particulier de réalisation de l'invention, le message comprend en outre au moins un identifiant relatif à un terminal autorisé ou à l'utilisateur d'un terminal autorisé à accéder au flux de données de la communication lorsque ledit flux a été enregistré par le terminal destinataire.

Dans un mode particulier de réalisation, les différentes étapes du procédé pour contrôler l'utilisation d'un flux de données transmis lors d'une communication établie entre au moins un dispositif émetteur et un terminal destinataire et les différentes étapes du procédé de communication sont déterminées par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes des procédés qui viennent d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre d'un mode particulier de réalisation de l'invention,
- la figure 2 présente un chronogramme détaillant les étapes du procédé pour contrôler un flux de données d'une communication mis en oeuvre par un dispositif émetteur et les étapes correspondantes du procédé de communication mis en oeuvre par un terminal récepteur selon un mode particulier de réalisation de l'invention,
- la figure 3 présente un chronogramme détaillant les étapes du procédé pour contrôler un flux de données d'une communication mis en oeuvre par un dispositif émetteur et les étapes correspondantes du procédé de communication mis en oeuvre par un terminal récepteur selon un autre mode particulier de réalisation de l'invention,
- la figure 4 illustre un dispositif permettant de mettre en oeuvre le procédé pour contrôler un flux de données d'une communication selon un mode particulier de réalisation de l'invention,
- la figure 5 illustre un dispositif permettant de mettre en oeuvre le procédé de communication selon un mode particulier de réalisation de l'invention.

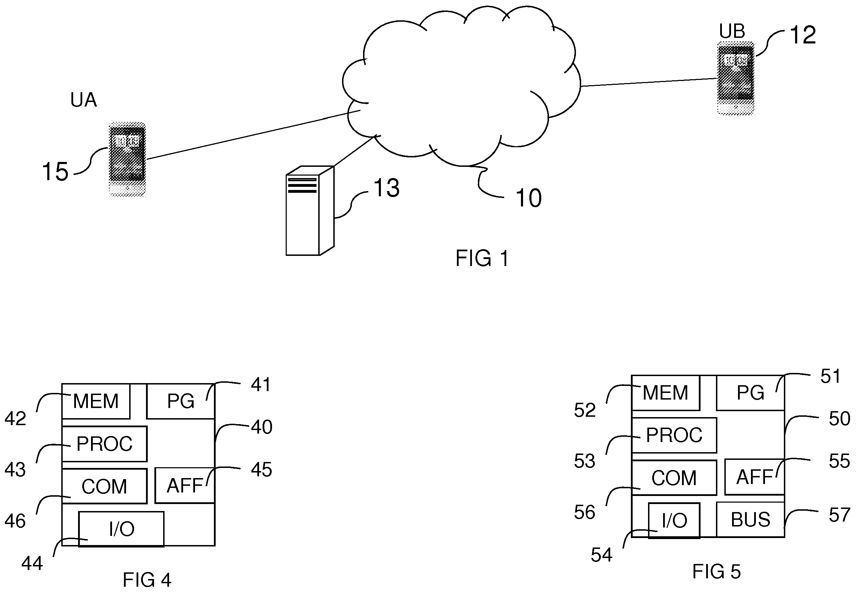

La figure 1 illustre un environnement de mise en oeuvre d'un mode particulier de réalisation de l'invention. L'environnement comprend un réseau de télécommunications 10 auquel sont connectés deux terminaux 12 et 15 et un serveur 13. Les terminaux 12 et 15 peuvent être tout type de terminaux permettant d'établir une communication téléphonique ou visiophonique, tels qu'un téléphone portable, un smartphone (téléphone intelligent en anglais), une tablette, une télévision connectée à un réseau de télécommunications, un ordinateur personnel sur lequel une application de téléphonie, aussi appelé softphone, est installée.

Le réseau de télécommunications 10 peut correspondre par exemple à un réseau IP (pour Internet Protocol en anglais), ou un réseau de télécommunications mobile de type GSM, EDGE, 3G, 3G+... Le réseau de communication 10 représenté peut correspondre à un groupe de réseaux de communication d'opérateurs différents interconnectés entre eux permettant d'échanger des données et d'établir des communications entre des terminaux connectés au réseau de communication 10 par l'intermédiaire de points d'accès (non représentés) au réseau de communication.

Dans le mode particulier de réalisation de l'invention décrit ici, un utilisateur UA du terminal 15 souhaite communiquer avec un utilisateur UB du terminal 12. La communication entre les terminaux 12 et 15 est établie via un réseau IMS (Internet Multimedia Subsystem en anglais), par exemple selon le protocole de communication SIP (Session Intiation Protocol en anglais).

Le procédé pour contrôler l'utilisation d'un flux de données transmis lors de la communication établie entre le terminal 15 et le terminal 12 est mis en oeuvre lors de la phase de négociation des paramètres de la communication, avant l'établissement de la communication entre les terminaux. Le procédé peut être mis en oeuvre de manière symétrique sur chacun des terminaux 12 et 15 ou sur un seul des terminaux. Lorsqu'il est mis en oeuvre sur le terminal 12, respectivement 15, le procédé pour contrôler l'utilisation d'un flux de données transmis lors de la communication permet de contrôler l'utilisation que peut faire le terminal 15, respectivement 12, du flux de données émis par le terminal 12, respectivement 15, au cours de la communication.

Le procédé de communication selon un mode particulier de réalisation de l'invention est également mis en oeuvre lors de la phase de négociation des paramètres de la communication, ainsi qu'au cours de la communication entre les terminaux 12 et 15. Le procédé de communication peut être mis en oeuvre de manière symétrique sur chacun des terminaux 15 et 12 ou sur un seul des terminaux. Lorsqu'il est mis en oeuvre par le terminal 15, respectivement 12, le procédé de communication permet au terminal 15, respectivement 12, d'effectuer un traitement du flux de données émis par le terminal 12, respectivement 15 au cours de la communication selon les autorisations que le terminal 12, respectivement 15, aura déterminé lors de la phase de négociation.

Selon un autre mode particulier de réalisation de l'invention, le serveur 13 connecté au réseau de télécommunications 10 est un serveur d'un fournisseur de services de communication. Par exemple, le serveur 13 est adapté pour mettre en oeuvre un service de diffusion de contenu multimédia, tels que du streaming de contenus audio ou vidéo, ou un service de messagerie vocale ou vidéo. La diffusion de contenu multimédia peut être une diffusion de contenu d'images, de messages vocaux, de messages textes synthétisés. Dans le mode particulier de réalisation de l'invention décrit ici, l'utilisateur UA du terminal 15 demande l'établissement d'une communication avec le serveur 13 afin d'accéder à un service proposé par le serveur 13. La demande d'établissement d'une communication émise par le terminal 15 est identique à une demande de communication émise vers un terminal. La communication entre le terminal 15 et le serveur 13 est par exemple établie via un réseau IMS (Internet Multimedia Subsystem en anglais), selon le protocole de communication SIP (Session Intiation Protocol en anglais).

Le procédé pour contrôler l'utilisation d'un flux de données transmis lors de la communication établie entre le terminal 15 et le serveur 13 est mis en oeuvre lors de la phase de négociation des paramètres de la communication, avant l'établissement de la communication entre le terminal 15 et le serveur 13. Dans ce mode particulier de réalisation de l'invention, le procédé pour contrôler l'utilisation d'un flux de données transmis lors de la communication est mis en oeuvre par le serveur 13. Le procédé pour contrôler l'utilisation d'un flux de données transmis lors de la communication permet de contrôler l'utilisation que peut faire le terminal 15 du flux de données émis par le serveur 13, au cours de la communication.

Le procédé de communication selon ce mode particulier de réalisation de l'invention est également mis en oeuvre lors de la phase de négociation des paramètres de la communication, ainsi qu'au cours de la communication entre le terminal 15 et le serveur 13. Le procédé de communication est mis en oeuvre par le terminal 15. Le procédé de communication permet au terminal 15 d'effectuer un traitement du flux de données émis par le serveur 13 au cours de la communication selon les autorisations que le serveur 13 aura déterminé lors de la phase de négociation.

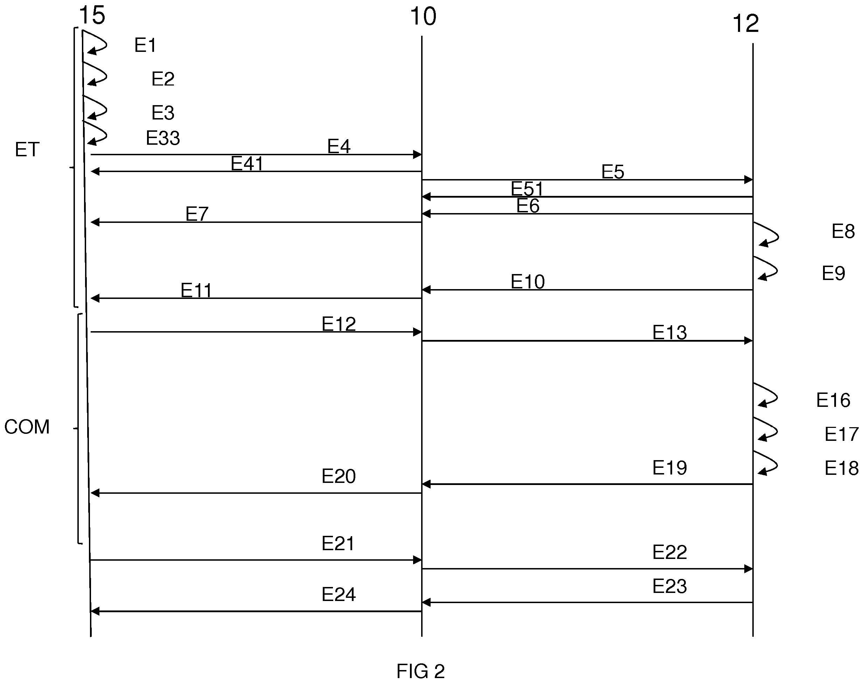

La figure 2 présente un chronogramme détaillant les étapes du procédé pour contrôler un flux de données d'une communication mis en oeuvre par un dispositif émetteur et les étapes correspondantes du procédé de communication mis en oeuvre par un terminal récepteur selon un mode particulier de réalisation de l'invention.

Afin d'établir une communication, par exemple de type vidéo, avec le terminal 12, lors d'une étape E1, l'utilisateur UA du terminal 15 sélectionne l'application correspondante sur son terminal 15 et compose le numéro de téléphone du terminal 12 ou choisit l'utilisateur UB dans une liste de contacts accessible par son terminal 15, par exemple dans son carnet d'adresses.

Lors d'une étape E2, le terminal 15 détermine au moins une règle d'utilisation du flux de données audio et au moins une règle d'utilisation du flux de données vidéo, lesdits flux de données audio et vidéo correspondant aux flux de la communication émis par le terminal 15 lorsque la communication entre le terminal 12 et le terminal 15 sera établie.

Une règle d'utilisation d'un flux de données correspond à un traitement que le terminal destinataire, ici le terminal 12, peut effectuer sur ledit flux de données. Les traitements effectués sur le flux de données peuvent par exemple correspondre à :
- l'enregistrement du flux de données dans un fichier qui peut être sauvegardé soit dans une mémoire locale du terminal 12, soit sur un support d'enregistrement connecté au terminal 12 tel qu'un disque dur, une clé USB, une carte mémoire.
- la lecture du fichier sauvegardé contenant le flux de données. Ce traitement peut être accompagné d'un paramètre du nombre de fois où le terminal destinataire peut effectuer ce traitement : 1 fois, N fois, un nombre illimité de fois.
- le partage du fichier sauvegardé contenant le flux de données sur un réseau social, un site Internet ou par une application de téléphonie.
- la transmission du fichier sauvegardé à d'autres destinataires. Ce traitement peut être accompagné d'un identifiant des applications autorisées pour effectuer cette transmission, par exemple un logiciel de messagerie électronique, une application de téléphonie, des protocoles de communications.

Dans le cas du partage du fichier sauvegardé ou de la transmission du fichier sauvegardé vers d'autres destinataires, la règle d'utilisation peut être accompagnée d'une liste d'identifiants de destinataires autorisés à avoir accès au fichier sauvegardé. Un destinataire peut être aussi bien un utilisateur, qu'un terminal, ou encore un nom de domaine de service.

Selon un mode particulier de réalisation de l'invention, la détermination des règles d'utilisation est effectuée manuellement par l'utilisateur UA du terminal 15 préalablement à la demande de communication vers le terminal 12.

Selon un autre mode particulier de réalisation de l'invention, la détermination des règles d'utilisation est effectuée automatiquement lors de la demande de communication vers le terminal 12 en fonction d'un critère prédéterminé. Par exemple, l'utilisateur UA peut définir des règles d'utilisation en fonction d'un historique de communication avec son interlocuteur. Si l'utilisateur UA a l'habitude de communiquer avec l'utilisateur UB ou si l'utilisateur UB est marqué comme personne de confiance dans le carnet d'adresse de l'utilisateur UA, des règles d'utilisation telles que enregistrement, lecture illimitée du fichier enregistré, partage du fichier enregistré seront déterminées. Au contraire, si l'utilisateur UA communique pour la première fois avec l'utilisateur UB, seule la règle d'utilisation de lecture du flux au cours de la communication sera déterminée.

Un critère prédéterminé pour déterminer une règle d'utilisation peut aussi correspondre au type de communication établie avec l'interlocuteur. Par exemple, l'utilisateur UA peut définir que les communications texte peuvent être enregistrées par le terminal destinataire, et que lors de communications vidéo, seuls les flux de données audio peuvent être enregistrés mais que les flux de données audio ne peuvent être ni partagés, ni transmis, et que les flux de données vidéo ne peuvent pas être enregistrés.

En variante, un critère prédéterminé pour déterminer une règle d'utilisation peut aussi correspondre au type de terminal de l'utilisateur UB. Par exemple, si l'utilisateur UB peut être joint avec le même numéro de téléphone sur différents terminaux possibles, l'utilisateur UA peut choisir que lorsque l'utilisateur UB utilise son terminal personnel de type teléphone mobile ou smartphone pour communiquer, l'enregistrement local du flux de données est autorisé. Mais lorsque l'utilisateur UB utilise un terminal collectif tel qu'une TV connectée ou un ordinateur pour communiquer, l'enregistrement du flux de données de la communication n'est pas autorisé.

Dans cette variante, le terminal 15 ne sait pas quel type de terminal sera utilisé pour communiquer, avant que l'utilisateur UB réponde à la demande d'appel. Une règle d'utilisation par défaut peut alors être déterminée, par exemple n'autorisant pas l'enregistrement, puis la règle d'utilisation est mise à jour lors de la réception de la réponse de l'utilisateur UB à la demande d'appel en fonction du type de terminal que l'utilisateur UB utilise.

Les règles d'utilisation ont été au préalable mémorisées dans une mémoire accessible par le terminal 15 : soit dans une mémoire interne du terminal ou dans un espace de stockage du réseau. Selon un mode particulier de réalisation de l'invention, les règles d'utilisation peuvent être mémorisées en association avec les contacts du carnet d'adresse de l'utilisateur UA.

Selon un autre mode particulier de réalisation de l'invention, les règles d'utilisation peuvent être mémorisées avec les paramètres de l'application de téléphonie qui définissent les préférences de communication de l'utilisateur UA.

Pour déterminer une règle d'utilisation d'un flux de données de la communication, le terminal 15 cherche les règles d'utilisation mémorisées dans les préférences de communication de l'utilisateur UA. Le terminal 15 examine si le numéro de téléphone composé par l'utilisateur UA est présent dans le carnet d'adresses de l'utilisateur UA et si c'est le cas, le terminal 15 vérifie si des règles d'utilisation spécifiques sont associées à ce numéro de téléphone. Les règles d'utilisation déterminées au préalable selon les préférences de communication sont mises à jour le cas échéant.

Selon un mode particulier de réalisation de l'invention, lors de l'étape de détermination d'au moins une règle d'utilisation, le terminal 15 détermine au moins un paramètre associé à une règle d'utilisation. Par exemple, pour une règle d'utilisation correspondant à l'enregistrement du flux de données, un paramètre associé peut être l'emplacement de stockage du fichier contenant le flux de données enregistré. Cet emplacement peut être un espace mémoire du terminal destinataire ou un espace mémoire distant qui est situé dans le réseau ou dans un équipement périphérique au terminal tel qu'une clé USB ou un disque dur externe par exemple.

Selon un autre exemple, pour une règle d'utilisation correspondant au partage ou à la transmission du flux de données à d'autres destinataires, un paramètre associé à la règle d'utilisation est une liste d'identifiants d'utilisateur, de terminaux ou de services destinataires du fichier contenant le flux de données enregistré. Un identifiant d'utilisateur peut être une adresse e-mail, un numéro de téléphone, une adresse SIP URI (pour Session Initiation Protocol Uniform Ressource Identifier en anglais). Un identifiant d'un terminal peut être un numéro d'identification internationale d'un terminal (par exemple IMEI), une adresse d'une carte d'interface réseau d'un terminal, un numéro de série d'un terminal. Un identifiant d'un service peut être une adresse d'un site Internet (URL pour Uniform Ressource Locator en anglais), une adresse IP (pour Internet Protocol en anglais), un nom de domaine.

Après la détermination des règles d'utilisation et éventuellement des paramètres associés selon l'étape E2, le terminal 15 insère lors d'une étape E3 les règles d'utilisation dans un message de négociation des paramètres du flux de données de la communication.

Au cours d'une phase de négociation ET représentée sur la figure 2, un message de négociation des paramètres de la communication est classiquement échangé entre des terminaux préalablement à l'établissement d'une session de communication. Par exemple, pour des communications selon le protocole SIP, des messages SDP (pour Session Description Protocol en anglais) sont échangés entre les terminaux. Un message SDP contient les capacités média du terminal émetteur du message SDP et les paramètres de connexion du terminal émetteur du message SDP nécessaires pour établir la communication entre le terminal émetteur du message SDP et un terminal destinataire. Les capacités média correspondent aux codecs supportés par le terminal émetteur, par exemple pour le flux audio : G711, G729, G722, etc, pour le flux vidéo : H263. H264, etc.... Les paramètres de connexion sont notamment le protocole de transport (par exemple UDP pour User Datagram Protocol en anglais, TCP pour Transmission Control Protocol en anglais), les adresses IP et ports IP de connexion du terminal émetteur du message SDP qui permettent au terminal émetteur du message SDP de recevoir les flux de données média du terminal destinataire au cours de la communication.

Par exemple, si le terminal 15 supporte:
- les codecs audio: G722 en priorité 1, G.711A en priorité 2, G.729A en priorité 3,
- les évènements DTMF selon le mode de transport RFC4733,
- le codec vidéo H263,
un message SDP émis par le terminal 15 à destination du terminal 12 comprend notamment les paramètres suivants :
"m=audio 2000 RTP/AVP 9 8 18 101
a=rtpmap:9 G722/16000
a=rtpmap:8 PCMA/8000
a=rtpmap:18 G729/8000
a=rtpmap:101 telephone-event/8000
a=fmtp:101 0-11
a=ptime:20
m=video 2002 RTP/AVP 34
a=rtpmap:34 H263/90000"

Par l'envoi du message SDP lors de la phase d'établissement de la communication, le terminal 15 informe le terminal 12 de ses capacités. La ligne commençant par « m » indique le flux de données concerné : audio, vidéo. Les lignes suivantes commençant par « a » indiquent les attributs ou paramètres du flux de données dans l'ordre de priorité définis par le terminal 15.

Lors de l'étape E3, le terminal 15 insère dans le message SDP les règles d'utilisation déterminées pour chaque flux de données de la communication. L'insertion est faite en ajoutant dans les attributs d'un flux de données, sur une ligne commençant par « a », une information relative à une règle d'utilisation possible du flux de données, suivie d'un paramètre indiquant si l'utilisation est autorisée ou non.

Le message SDP contient par exemple les informations suivantes relatives au flux de données audio :
« a=:read :yes », cette ligne autorise le terminal 12 à lire le flux de données audio, en temps réel, au cours de la communication,
« a=:record-local :yes », cette ligne autorise le terminal 12 à enregistrer le flux de données audio dans un fichier dans une mémoire locale du terminal 12,
« a=:record-peripheral:no », cette ligne n'autorise pas le terminal 12 à enregistrer le flux de données audio dans un fichier sur un périphérique externe,
« a=:record-cloud:no », cette ligne n'autorise pas le terminal 12 à enregistrer le flux de données audio dans un fichier sur le réseau,
« a=share:no », cette ligne n'autorise pas le partage du flux de données audio avec d'autres destinataires.

Selon un autre mode particulier de réalisation de l'invention, le paramètre (« yes/no ») indiquant si l'utilisation est autorisée ou non peut être omis. La présence de l'information relative à une règle d'utilisation du flux de données dans le message SDP signifie que l'utilisation est autorisée.

Selon un autre mode particulier de réalisation de l'invention, le terminal 15 insère dans le message SDP lors d'une étape E33 au moins un paramètre complémentaire associé à la règle d'utilisation. Pour une règle d'utilisation relative à l'enregistrement du flux de données, un paramètre complémentaire peut correspondre à l'emplacement autorisé de stockage du fichier contenant le flux de données.

Pour une règle d'utilisation relative au partage ou au transfert du fichier vers d'autres destinataires, un paramètre complémentaire correspond à une liste d'identifiants de destinataires autorisés à lire le flux de données contenu dans le fichier. Un tel destinataire peut être un utilisateur, un terminal ou un service.

Dans ce mode particulier de réalisation de l'invention, le message SDP contient par exemple les informations suivantes :
« a=share: http://www.socialnetwork.com; dom.com », cette ligne autorise le partage du flux de données concerné sur le site Internet « socialnetwork » et sur le domaine de navigation dom.com ».

Selon un autre mode particulier de réalisation de l'invention, le terminal 15 peut insérer dans le message SDP une information relative à l'utilisateur UA ou au terminal 15. Cette information est destinée à être insérée dans le fichier contenant le flux de données lorsque le flux de données est enregistré par le terminal 12 si l'enregistrement est autorisé par le terminal 15.

Dans ce mode particulier de réalisation de l'invention, le message SDP contient par exemple les informations suivantes :
« a=owner :+33296053xxx ;+33686xxxxxx ;prenomUA.nomUA@dom.com »
Cette ligne fournit des informations sur le propriétaire ou créateur, ici l'utilisateur UA, du flux de données contenu dans le fichier sauvegardé par le terminal 12.

Le message SDP est encapsulé dans un message SIP INVITE. Le message SIP INVITE est ensuite envoyé par le terminal 15 au terminal 12 par l'intermédiaire du réseau IMS 10 lors d'une étape E4. Le message SIP INVITE envoyé par le terminal 15 correspond à une demande d'établissement de communication avec le terminal 12.

En réponse au message SIP INVITE du terminal 15, le réseau 10 envoie au terminal 15 un message SIP 100 TRYING lors d'une étape E41.

Le réseau 10 transmet ensuite le message SIP INVITE émis par le terminal 15 au terminal 12 lors d'une étape E5. Le terminal 12 répond en envoyant au réseau 10 un message SIP 100 TRYING lors d'une étape E51.

Suite à la réception de la demande d'établissement de communication en provenance du terminal 15, le terminal 12 déclenche une sonnerie afin d'avertir l'utilisateur UB de la demande de l'utilisateur UA. Le terminal 12 envoie alors au terminal 15 un message SIP 180 RINGING par l'intermédiaire du réseau 10, lors d'une étape E6. Le réseau 10 transmet ensuite le message SIP 180 RINGING au terminal 15 lors d'une étape E7.

Suite à la réception du message SIP INVITE émis lors de l'étape E5, au cours d'une étape E8, le terminal 12 extrait les règles d'utilisation qui ont été insérées dans le message SDP du message SIP INVITE émis par le terminal 15. Le terminal 12 positionne ensuite les autorisations correspondantes pour chaque type de flux de données, dans l'application de communication utilisée pour la communication à établir, en fonction des paramètres « yes/no » associés aux règles d'utilisation. Lorsqu'aucune information relative à une règle d'utilisation pour un flux de données n'est présente dans le message SDP, le terminal 12 détermine que le traitement du flux de données selon cette règle d'utilisation n'est pas autorisé. En variante, lorsqu'aucune information relative à une règle d'utilisation pour un flux de données n'est présente dans le message SDP, le terminal 12 détermine que le traitement du flux de données selon cette règle d'utilisation est autorisé, ou au moins pour la règle d'utilisation de lecture.

Lorsque l'utilisateur UB décide de décrocher la demande d'appel, lors d'une étape E9, le terminal 12 détermine les règles d'utilisation relatives aux flux de données de la communication à établir et insère une information relative auxdites règles d'utilisation déterminées dans un message SDP.

Dans cet exemple, si le terminal 12 supporte:
- les codecs audio: G711. en priorité 1, G.729A en priorité 2,
- les évènements DTMF selon le mode de transport RFC4733,
et si le terminal 12 autorise la lecture et l'enregistrement local du flux de données audio, un message SDP généré et émis par le terminal 12 à destination du terminal 15 comprend notamment les paramètres suivants :
"m=audio 4000 RTP/AVP 8 18 101
a=rtpmap:8 PCMA/8000
a=rtpmap:18 G729/8000
a=rtpmap:101 telephone-event/8000
a=fmtp:101 0-11
a=ptime:20
a=:read :yes
a=:record-local :yes
m=video 0 RTP/AVP 34"

Lors d'une étape E10, le terminal 12 émet un message SIP 200 OK comprenant notamment le message SDP généré précédemment, vers le terminal 15. Lors d'une étape E11, le réseau 10 transmet le message SIP 200 OK au terminal 15.

Après la réception du message SIP 200 OK par le terminal 15, le terminal 15 émet un message d'acquittement SIP ACK (non représenté sur la figure 2) vers le terminal 12. Le terminal 15 extrait également les règles d'utilisation insérées par le terminal 12 dans le message SDP émis lors de l'étape E10 et positionne les autorisations correspondantes pour chaque type de flux de données, dans l'application de communication utilisée pour la communication à établir.

La communication entre le terminal 15 et le terminal 12 peut ensuite être établie en utilisant les paramètres de communication échangés dans les messages SDP.

Dans cet exemple, après l'échange des messages SDP lors de la phase de négociation ET, les terminaux 15 et 12 utilisent le codec audio PCMA (G.711A) car c'est dans l'ordre de préférence des terminaux indiqué dans le message SDP respectif qu'ils ont émis, le premier codec audio commun aux deux terminaux. Les terminaux 15 et 12 pourront également utiliser l'échange de DTMF (pour Dual Tone Module Frequency en anglais) selon le mode RFC4733. La vidéo ne peut être utilisée entre les terminaux 15 et 12 puisque le terminal 12 refuse l'usage de la vidéo en positionnant le port =0 entre le mot vidéo et RTP dans la ligne m=video 0 RTP/AVP 34. Le terminal 15 pourra enregistrer le flux de données audio reçu du terminal 12 car le terminal 12 a inséré cette autorisation dans le message SDP que le terminal 12 a émis, par la ligne « a= :record-local :yes ». De même, le terminal 12 pourra enregistrer le flux de données audio reçu du terminal 15 car le terminal 15 a inséré cette autorisation dans le message SDP que le terminal 15 a émis. Lors de la phase de communication (COM sur la figure 2), les terminaux 15 et 12 échangent des flux de données. Par exemple, lors d'une étape E12, le terminal 15 émet vers le terminal 12 un flux de données audio par l'intermédiaire du réseau 10 lors de l'étape E13. Lors d'une étape E19, le terminal 12 émet également vers le terminal 15 un flux de données audio par l'intermédiaire du réseau 10 lors de l'étape E20.

L'utilisateur UB du terminal 12 souhaite par exemple enregistrer le flux de données audio de la communication en cours. Pour cela, l'interface de téléphonie utilisée pour la communication affiche à l'utilisateur UB les traitements possibles pour chaque flux de données de la communication. L'utilisateur UB sélectionne alors sur son terminal 12 l'option enregistrement par exemple via un menu de l'interface de téléphonie. Comme la règle d'utilisation « record-local » est autorisée, le terminal 12 déclenche lors d'une étape E16 l'enregistrement du flux de données audio reçu en provenance du terminal 15 au cours de la communication, dans un fichier sauvegardé stocké dans une mémoire interne du terminal 12.

En variante, le terminal 12 enregistre également le flux de données audio émis par le terminal 12 au cours de la communication dans le même fichier.

Selon un mode particulier de réalisation de l'invention, lors d'une étape E17, le terminal 12 insère dans le fichier contenant le flux de données audio enregistré au moins un identifiant relatif à l'utilisateur UA ou au terminal 15. L'identifiant à insérer dans le fichier est un identifiant qui a été inséré sur la ligne d'attribut « owner » relative au flux de données audio dans le message SDP émis par le terminal 15, lors de la phase d'établissement de la session de communication.

Selon un autre mode particulier de réalisation de l'invention, lors d'une étape E18, le terminal 12 insère dans le fichier contenant le flux de données audio enregistré au moins un identifiant relatif à un utilisateur ou un terminal autorisé à lire le contenu du fichier enregistré. L'identifiant à insérer dans le fichier est par exemple un identifiant qui a été inséré sur la ligne d'attribut « share » relative au flux de données audio dans le message SDP émis par le terminal 15, lors de la phase d'établissement de la session de communication.

A la fin de la communication, lorsque l'utilisateur UA raccroche l'appel, lors de l'étape 21, le terminal 15 envoie au terminal 12 un message SIP BYE pour mettre fin à la communication. Le réseau 10 prolonge le message SIP BYE vers le terminal 12 lors de l'étape E22. Le terminal 12 répond par un message SIP 200 OK lors de l'étape E23. Le réseau 10 prolonge le message SIP 200 OK vers le terminal 15 lors de l'étape E24.

Selon un mode particulier de réalisation de l'invention, le terminal 15 peut ne pas avoir autorisé l'enregistrement du flux de données par le terminal 12, lors de la phase d'établissement de la communication. La règle d'utilisation d'enregistrement est par exemple positionnée à la valeur « no » ou omise dans le message SDP envoyé par le terminal 15. Au cours de la communication, lorsque l'utilisateur UB du terminal 12 souhaite enregistrer le flux de données audio de la communication, il demande oralement à son correspondant de lui donner les droits d'enregistrements. Si l'utilisateur UA est d'accord, il sélectionne dans son application de communication le menu permettant de modifier les règles d'utilisation des flux de la communication en cours. La liste des flux en cours d'échange s'affiche alors sur l'écran du terminal 15. Dans l'exemple décrit ici, un seul flux audio est affiché. Une liste déroulante de règles d'utilisation associées au flux audio s'affiche également sur l'écran du terminal 15. Si l'utilisateur UA choisit une ou plusieurs règles d'utilisation différentes des règles d'utilisation précédemment négociées lors de la phase d'établissement d'appel, alors le terminal 15 envoie au terminal 12 un message SIP Re-INVITE (ou SIP UPDATE) contenant un message SDP contenant les nouvelles règles d'utilisation choisies par l'utilisateur UA.

Le terminal 12 répond par un message SIP 200 OK avec le même message SDP que celui que le terminal 12 avait transmis lors de la phase d'établissement d'appel puisque le terminal 12 ne modifie pas les règles d'utilisation qui étaient positionnées pour le terminal 15. En réponse, le terminal 15 envoie un message d'acquittement SIP ACK.

Selon un autre mode particulier de réalisation de l'invention, lorsque l'utilisateur UB du terminal 12 souhaite enregistrer le flux de données audio de la communication, il sélectionne le menu « enregistrement » de son application de communication. Comme la règle d'utilisation d'enregistrement n'est pas autorisée pour le terminal 12, le terminal 12 envoie un message textuel vers le terminal 15, par exemple en utilisant un message SIP MESSAGE avec le texte suivant : « Votre interlocuteur demande l'autorisation d'enregistrer la communication en cours ». Ainsi, le terminal 12 demande à l'utilisateur UA l'autorisation d'enregistrer le flux de données audio de la communication.

Le message textuel reçu par le terminal 15 s'affiche alors sur l'écran du terminal 15 et est automatiquement répondu par un message SIP 200 OK envoyé au terminal 12.

Si l'utilisateur UA souhaite autoriser le terminal 12 à enregistrer le flux de données audio, il utilise l'interface de l'application de communication pour modifier les règles d'utilisation de la communication comme décrit dans le mode de réalisation décrit ci-dessus à l'aide d'une phase d'échange de message de renégociation SIP Re-INVITE ou SIP UPDATE.

Sur réception du nouveau message SDP reçu lors de la phase de renégociation des paramètres envoyé par le terminal 15, le terminal 12 met à jour les autorisations correspondantes dans son application de communication et démarre l'enregistrement du flux de données audio de la communication.

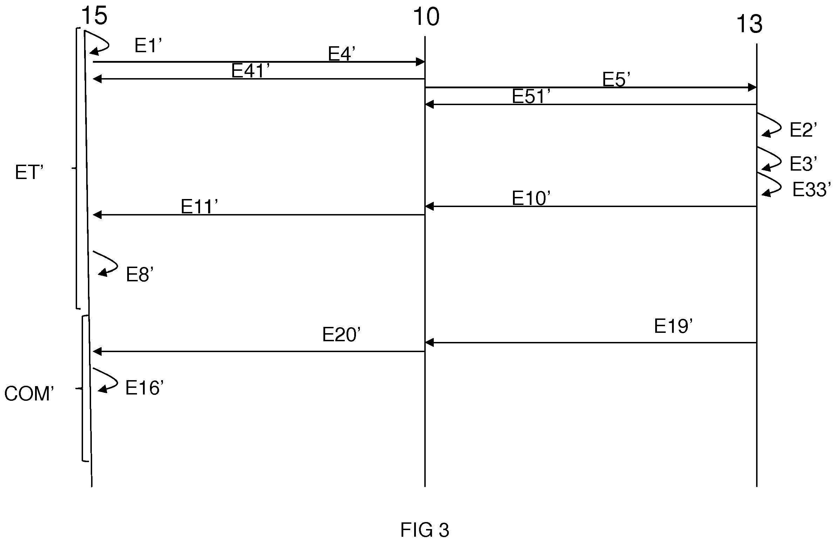

La figure 3 présente un chronogramme détaillant les étapes du procédé pour contrôler un flux de données d'une communication mis en oeuvre par un dispositif émetteur et les étapes correspondantes du procédé de communication mis en oeuvre par un terminal récepteur selon un autre mode particulier de réalisation de l'invention.

Dans le mode particulier de réalisation de l'invention décrit ici, lors de l'étape E1', l'utilisateur UA du terminal 15 demande l'établissement d'une communication avec le serveur 13 afin d'accéder à un service proposé par le serveur 13. La demande d'établissement d'une communication émise par le terminal 15 est identique à une demande de communication émise vers un terminal 12 telle que décrite en relation avec la figure 2. La communication entre le terminal 15 et le serveur 13 est par exemple établie via un réseau IMS (Internet Multimedia Subsystem en anglais), selon le protocole de communication SIP (Session Intiation Protocol en anglais) à l'aide des étapes E4', E5', E41' et E51' mises en oeuvre au cours de la phase de négociation ET' et correspondant respectivement aux étapes E4, E5, E41 et E51 décrite en relation avec la figure 2.

Lors d'une étape E2', le serveur 13 détermine au moins une règle d'utilisation du flux de données audio et au moins une règle d'utilisation du flux de données vidéo, lesdits flux de données audio et vidéo correspondant aux flux de la communication émis par le serveur 13 pour répondre à la demande de service émise par le terminal 15.

Selon un mode particulier de réalisation de l'invention, le serveur 13 détermine une règle d'utilisation relative à un flux de données en fonction d'une ressource permettant au terminal 15 d'accéder au serveur 13. Une telle ressource d'accès peut correspondre à un numéro de téléphone, une adresse IP, une URL, une application installée sur le terminal 15.

Le serveur 13 détermine par exemple que le terminal 15 peut enregistrer les flux de données audio et vidéo que le serveur va émettre vers le terminal 15. Le serveur 13 insère lors d'une étape E3' sur une ligne d'attribut relative au flux de données audio et sur une ligne d'attribut relative au flux de données vidéo, la règle d'utilisation « record-local=yes », dans le message SDP.

Lors d'une étape E10', le serveur 13 émet vers le terminal 15 un message SIP 200 OK comprenant notamment le message SDP généré précédemment. Lors d'une étape E11', le réseau 10 transmet le message SIP 200 OK au terminal 15.

Suite à la réception du message SIP 200 OK lors de l'étape E11', au cours d'une étape E8', le terminal 15 extrait les règles d'utilisation qui ont été insérées dans le message SDP du message SIP 200 OK émis par le serveur 13. Le terminal 15 positionne ensuite les autorisations correspondantes pour chaque type de flux de données, dans l'application de communication utilisée pour accéder au serveur 13, en fonction des paramètres « yes/no » associés aux règles d'utilisation.

Lors de la phase de communication COM', le serveur 13 émet vers le terminal 15 un flux de données audio et un flux de données vidéo lors d'une étape E19' par l'intermédiaire du réseau 10 qui transmet lesdits flux de données au terminal 15 lors de l'étape E20'. L'utilisateur UA du terminal 15 souhaite enregistrer les flux de données audio et vidéo de la communication en cours. Pour cela, l'interface de l'application de communication utilisée pour accéder au serveur 13 affiche à l'utilisateur UA les traitements possibles pour chaque flux de données de la communication. L'utilisateur UA sélectionne alors sur son terminal 15 l'option enregistrement par exemple via un menu de l'interface de communication. Comme la règle d'utilisation « record-local » est autorisée, le terminal 15 déclenche lors d'une étape E16' l'enregistrement du flux de données audio et du flux de données vidéo reçus en provenance du serveur 13 au cours de la communication, dans un fichier sauvegardé stocké dans une mémoire interne du terminal 15.

La figure 4 illustre un dispositif 40 permettant de mettre en oeuvre le procédé pour contrôler un flux de données d'une communication selon un mode particulier de réalisation de l'invention.

Le dispositif comprend un espace de stockage 42, par exemple une mémoire (MEM), une unité de traitement 43, équipée par exemple d'un microprocesseur (PROC), et pilotée par le programme d'ordinateur (PG) 41, mettant en oeuvre le procédé pour contrôler un flux de données d'une communication tel que décrit dans l'invention en relation avec la figure 2 ou la figure 3.

A l'initialisation, les instructions de code du programme d'ordinateur 41 sont par exemple chargées en mémoire avant d'être exécutées par le processeur de l'unité de traitement 43. Le microprocesseur de l'unité de traitement 43 met en oeuvre les étapes du procédé pour contrôler un flux de données transmis lors d'une communication établie entre au moins le dispositif 40 et un terminal destinataire. Le microprocesseur de l'unité de traitement 43 met notamment en oeuvre au cours d'une phase de négociation des paramètres du flux de données de la communication, les étapes de détermination d'au moins une règle d'utilisation du flux de données de la communication, et d'insertion de la au moins une règle d'utilisation déterminée dans un message de négociation des paramètres du flux de données de la communication, le message étant destiné à être transmis au terminal destinataire, selon les instructions du programme d'ordinateur 41.

L'espace de stockage 42 permet notamment de stocker des règles d'utilisation prédéterminées ou des préférences de communication qui permettront de déterminer des règles d'utilisation d'un flux de données de communication.

Selon un mode particulier de réalisation de l'invention, l'espace de stockage 42 permet aussi de stocker un carnet d'adresse de contacts d'un utilisateur du dispositif 40.

Selon un autre mode particulier de réalisation de l'invention, l'espace de stockage 42 permet de stocker un fichier contenant un flux de données multimédia destiné à être transmis au cours de la communication entre le dispositif 40 et le terminal destinataire, par exemple lorsque le dispositif 40 correspond au serveur 13 décrit en relation avec les figures 1 et 3.

Selon un mode particulier de réalisation de l'invention, le dispositif comprend également une interface utilisateur 44 (I/O) permettant à l'utilisateur d'interagir avec le dispositif 40. Cette interface utilisateur peut par exemple correspondre à un clavier, une souris, ou un écran tactile.

Selon un mode particulier de réalisation de l'invention, le dispositif comprend également un moyen d'affichage 45 (AFF) permettant par exemple d'afficher à l'utilisateur du dispositif des fenêtres d'interaction avec une application logicielle exécutée par le dispositif.

Le dispositif comporte aussi une unité d'accès 46 (COM) à un réseau permettant par exemple au dispositif 40 d'accéder à Internet ou d'établir des communications via différents réseaux de communications, comme par exemple un réseau de téléphonie mobile, un réseau informatique, ou un réseau satellitaire.

Selon un mode particulier de réalisation de l'invention, le dispositif 40 est compris dans un terminal tel que par exemple un ordinateur personnel, fixe ou mobile, un téléphone mobile, une tablette, une télévision connectée.

Selon un autre mode particulier de réalisation de l'invention, le dispositif 40 est compris dans un serveur.

La figure 5 illustre un dispositif 50 permettant de mettre en oeuvre le procédé de communication selon un mode particulier de réalisation de l'invention.

Le dispositif comprend un espace de stockage 52, par exemple une mémoire (MEM), une unité de traitement 53, équipée par exemple d'un microprocesseur (PROC), et pilotée par le programme d'ordinateur (PG) 51, mettant en oeuvre le procédé de communication tel que décrit dans l'invention en relation avec les figures 2 et 3.

A l'initialisation, les instructions de code du programme d'ordinateur 51 sont par exemple chargées en mémoire avant d'être exécutées par le processeur de l'unité de traitement 53. Le microprocesseur de l'unité de traitement 53 met en oeuvre les étapes du procédé de communication entre au moins un dispositif émetteur et le dispositif 50, et notamment au cours d'une phase de négociation des paramètres d'un flux de données de la communication, une étape de réception d'un message de négociation des paramètres du flux de données, en provenance du dispositif émetteur, et une étape d'extraction dans le message de négociation des paramètres du flux de données reçu, d'au moins une règle d'utilisation du flux de données de la communication, selon les instructions du programme d'ordinateur 51. Puis pendant une phase de communication entre le dispositif émetteur et le dispositif 50, le microprocesseur de l'unité de traitement 53 met en oeuvre une étape de traitement du flux de données de la communication selon la règle d'utilisation extraite, selon les instructions du programme d'ordinateur 51.

L'espace de stockage 52 permet notamment de stocker les règles d'utilisation extraites.

Selon un mode particulier de réalisation de l'invention, l'espace de stockage 52 permet de stocker un fichier contenant les flux de données de la communication lorsque les flux de données sont enregistrés par le dispositif 50.

Selon un autre mode particulier de réalisation de l'invention, le stockage du fichier contenant les flux de données de la communication lorsque les flux de données sont enregistrés par le dispositif 50, est effectué sur un espace de stockage externe connecté par au dispositif 50 par un port 57 de connexion (BUS). Le port de connexion 57 permet de connecter des périphériques au dispositif 50, par exemple un disque dur, une clé USB.

Le dispositif comprend également une interface utilisateur 54 (I/O) permettant à l'utilisateur d'interagir avec le dispositif 50. Cette interface utilisateur peut par exemple correspondre à un clavier, une souris, ou un écran tactile.

Selon un autre mode particulier de réalisation de l'invention, le dispositif comprend également un moyen d'affichage 55 (AFF) permettant par exemple d'afficher à l'utilisateur du dispositif un flux de données vidéo ou des fenêtres d'interaction avec une application logicielle exécutée par le dispositif.

Le dispositif comporte aussi une unité d'accès 56 (COM) à un réseau permettant par exemple au dispositif 50 d'accéder à Internet ou d'établir des communications via différents réseaux de communications, comme par exemple un réseau de téléphonie mobile, un réseau informatique, ou un réseau satellitaire.

Le dispositif 50 est compris dans un terminal tel que par exemple un ordinateur personnel, fixe ou mobile, un téléphone mobile, une tablette, une télévision connectée.

## Revendications

1. Procédé pour contrôler l'utilisation d'un flux de données transmis lors d'une communication établie entre au moins un dispositif émetteur (15, 13) et un terminal destinataire (12, 15), **caractérisé en ce qu'**au cours d'une phase de négociation des paramètres du flux de données de la communication, le procédé comprend :
- une étape de détermination (E2) automatique d'au moins une règle d'utilisation par le terminal destinataire du flux de données de la communication, en fonction du terminal destinataire et d'au moins un critère choisi parmi un historique de communication avec le terminal destinataire, un lien avec le terminal destinataire, un type de terminal destinataire, un type de communication avec le terminal destinataire, un type de connectivité avec le terminal destinataire, et/ou d'une adresse ou d'un réseau d'accès utilisé par le terminal destinataire pour joindre le dispositif émetteur afin d'établir la communication ;
- une étape d'insertion (E3) de la au moins une règle d'utilisation déterminée dans un message de négociation des paramètres du flux de données de la communication, le message étant destiné à être transmis au terminal destinataire (12, 15).

2. Procédé selon la revendication 1, **caractérisé en ce qu'**il comprend l'insertion (E4) d'au moins un paramètre associé à la règle d'utilisation, dans le message de négociation des paramètres du flux de données de la communication.

3. Procédé selon la revendication 1 ou 2 dans lequel ladite au moins une règle d'utilisation comprend une action effectuée au cours de la communication parmi une lecture du flux, un enregistrement local du flux ou un enregistrement externe du flux par le terminal destinataire.

4. Procédé selon la revendication 3 dans lequel ladite au moins une règle d'utilisation comprend une action effectuée sur le flux après son enregistrement parmi une modification du flux, un partage du flux ou un transfert du flux vers un autre destinataire.

5. Procédé de communication entre au moins un dispositif émetteur (15, 13) et un terminal destinataire (12), le procédé comprenant une phase de négociation des paramètres d'un flux de données de la communication au cours de laquelle un message de négociation des paramètres du flux de données est reçu (E5) en provenance du dispositif émetteur, ledit message de négociation comprenant au moins une règle d'utilisation par le terminal destinataire du flux de données de la communication insérée par le dispositif émetteur conformément à un procédé de contrôle selon l'une quelconque des revendications 1 à 4, le procédé de communication est **caractérisé en ce qu'**il comprend :
- une étape d'extraction (E8) dans ledit message de négociation reçu, de ladite au moins une règle d'utilisation par le terminal destinataire du flux de données de la communication, et
- pendant une phase de communication entre le dispositif émetteur et le terminal destinataire, une étape de traitement (E16) du flux de données de la communication selon la règle d'utilisation extraite.

6. Procédé de communication selon la revendication 5, **caractérisé en ce qu'**il comprend :
∘ selon une règle d'utilisation extraite, une étape d'enregistrement (E16) du flux de données reçu,
∘ et une étape d'insertion (E17) dans un fichier contenant le flux données enregistré d'un identifiant relatif au dispositif émetteur ou à l'utilisateur du dispositif émetteur.

7. Procédé de communication selon l'une quelconque des revendications 5 ou 6, **caractérisé en ce qu'**il comprend:
∘ selon une première règle d'utilisation extraite, une étape d'enregistrement (E16) du flux de données reçu,
∘ selon une deuxième règle d'utilisation extraite, une étape d'insertion (E18) dans un fichier contenant le flux de données enregistré d'un identifiant relatif à un terminal autorisé ou à l'utilisateur d'un terminal autorisé à accéder au flux de données enregistré.

8. Dispositif pour contrôler l'utilisation d'un flux de données transmis lors d'une communication établie entre au moins le dispositif et un terminal destinataire, **caractérisé en ce qu'**il comprend :
- des moyens de détermination automatique d'au moins une règle d'utilisation par le terminal destinataire du flux de données de la communication en fonction du terminal destinataire et d'au moins un critère choisi parmi un historique de communication avec le terminal destinataire, un lien avec le terminal destinataire, un type de terminal destinataire, un type de communication avec le terminal destinataire, un type de connectivité avec le terminal destinataire, et/ou d'une adresse ou d'un réseau d'accès utilisé par le terminal destinataire pour joindre le dispositif émetteur afin d'établir la communication,
- des moyens d'insertion d'au moins une règle d'utilisation déterminée dans un message de négociation des paramètres du flux de données de la communication, le message étant destiné à être transmis au terminal destinataire,
lesdits moyens de détermination et d'insertion étant destinés à être activés au cours d'une négociation des paramètres du flux de données de la communication.

9. Système comprenant :
- un dispositif émetteur ; et
- un terminal destinataire ;
dans lequel ledit dispositif émetteur est conforme à la revendication 8 et apte à contrôler l'utilisation d'un flux de données transmis lors d'une communication établie entre ce dispositif émetteur et le terminal destinataire, et le terminal destinataire comprend :
- des moyens d'extraction dans un message de négociation des paramètres d'un flux de données de la communication, ledit message de négociation étant reçu en provenance du dispositif émetteur, d'au moins une règle d'utilisation par le terminal destinataire du flux de données de la communication, lesdits moyens d'extraction étant destinés à être activés au cours d'une négociation des paramètres du flux de données de la communication entre le dispositif émetteur et le terminal destinataire, et
- des moyens de traitement du flux de données de la communication selon la règle d'utilisation extraite, lesdits moyens de traitement étant destinés à être activés en cours de communication entre le dispositif émetteur et le terminal destinataire.

10. Terminal comprenant un dispositif selon la revendication 8.

11. Serveur comprenant un dispositif selon la revendication 8.

12. Programme d'ordinateur comportant des instructions de code de programme pour l'exécution des étapes du procédé selon l'une quelconque des revendications 1 à 4 ou des étapes du procédé de communication selon l'une quelconque des revendications 5 à 7, lorsque le programme est exécuté par un processeur.

## Patentansprüche

1. Verfahren zum Steuern der Verwendung eines Datenflusses, der während einer Kommunikation übertragen wird, die zwischen mindestens einer Sendevorrichtung (15, 13) und einem Empfangsendgerät (12, 15) erstellt wird, **dadurch gekennzeichnet, dass** das Verfahren während einer Verhandlungsphase der Parameter des Datenflusses aufweist:
- einen Schritt des automatischen Bestimmens (E2) von mindestens einer Nutzungsregel durch das Empfangsendgerät des Datenflusses der Kommunikation in Abhängigkeit von dem Empfangsendgerät und von mindestens einem Kriterium, das aus einer Kommunikationshistorie mit dem Empfangsendgerät, einer Verbindung mit dem Empfangsendgerät, einer Art von Empfangsendgerät, einer Art von Kommunikation mit dem Empfangsendgerät, einer Art von Konnektivität mit dem Empfangsendgerät und/oder einer Adresse oder einem Zugangsnetz, das von dem Empfangsendgerät verwendet wird, um die Sendevorrichtung zu kontaktieren, um die Kommunikation zu erstellen, ausgewählt wird,
- einen Schritt des Einfügens (E3) der mindestens einen bestimmten Nutzungsregel in eine Verhandlungsnachricht der Parameter des Datenflusses der Kommunikation, wobei die Nachricht dazu bestimmt ist, an das Empfangsendgerät (12, 15) übertragen zu werden.

2. Verfahren nach Anspruch 1, **dadurch gekennzeichnet, dass** es das Einfügen (E4) von mindestens einem Parameter, der mit der Nutzungsregel verbunden ist, in die Verhandlungsnachricht der Parameter des Datenflusses der Kommunikation aufweist.

3. Verfahren nach Anspruch 1 oder 2, wobei die mindestens eine Nutzungsregel eine Aktion, die während der Kommunikation ausgeführt wird, unter einem Lesen des Flusses, einem lokalen Aufzeichnen des Flusses oder einem externen Aufzeichnen des Flusses durch das Empfangsendgerät aufweist.

4. Verfahren nach Anspruch 3, wobei die mindestens eine Nutzungsregel eine Aktion, die an dem Fluss nach seinem Aufzeichnen ausgeführt wird, unter einem Modifizieren des Flusses, einem Aufteilen des Flusses oder einem Übertragen des Flusses an einen anderen Empfänger aufweist.

5. Verfahren zur Kommunikation zwischen mindestens einer Sendevorrichtung (15, 13) und einem Empfangsendgerät (12), wobei das Verfahren eine Verhandlungsphase der Parameter eines Datenflusses der Kommunikation aufweist, während der eine Verhandlungsnachricht der Parameter des Datenflusses von der Sendevorrichtung empfangen wird (E5), wobei die Verhandlungsnachricht mindestens eine Nutzungsregel durch das Empfangsendgerät des Datenflusses der Kommunikation aufweist, die durch die Sendevorrichtung gemäß einem Verfahren zum Steuern nach einem der Ansprüche 1 bis 4 eingefügt wird, wobei das Verfahren zur Kommunikation **dadurch gekennzeichnet ist, dass** es aufweist:
- einen Schritt des Extrahierens (E8) aus der empfangenen Verhandlungsnachricht der mindestens einen Nutzungsregel durch das Empfangsendgerät des Datenflusses der Kommunikation und
- während einer Kommunikationsphase zwischen der Sendevorrichtung und dem Empfangsendgerät einen Schritt des Verarbeitens (E16) des Datenflusses der Kommunikation gemäß der extrahierten Nutzungsregel.

6. Verfahren zur Kommunikation nach Anspruch 5, **dadurch gekennzeichnet, dass** es aufweist:
∘ gemäß einer extrahierten Nutzungsregel einen Schritt des Aufzeichnens (E16) des empfangenen Datenflusses
∘ und einen Schritt des Einfügens (E17) in eine Datei, die den aufgezeichneten Datenfluss enthält, einer Kennung in Bezug auf die Sendevorrichtung oder auf den Nutzer der Sendevorrichtung.

7. Verfahren zur Kommunikation nach einem der Ansprüche 5 oder 6, **dadurch gekennzeichnet, dass** es aufweist:
∘ gemäß einer ersten extrahierten Nutzungsregel einen Schritt des Aufzeichnens (E16) des empfangenen Datenflusses,
∘ gemäß einer zweiten extrahierten Nutzungsregel einen Schritt des Einfügens (E18) in eine Datei, die den aufgezeichneten Datenfluss enthält, einer Kennung in Bezug auf ein autorisiertes Endgerät oder auf den Nutzer des Endgeräts, der autorisiert ist, um auf den aufgezeichneten Datenfluss zuzugreifen.

8. Vorrichtung zum Steuern der Verwendung eines Datenflusses, der während einer Kommunikation übertragen wird, die zwischen mindestens der Sendevorrichtung und einem Empfangsendgerät erstellt wird, **dadurch gekennzeichnet, dass** sie aufweist:
- Mittel zum automatischen Bestimmen von mindestens einer Nutzungsregel durch das Empfangsendgerät des Datenflusses der Kommunikation in Abhängigkeit von dem Empfangsendgerät und von mindestens einem Kriterium, das aus einer Kommunikationshistorie mit dem Empfangsendgerät, einer Verbindung mit dem Empfangsendgerät, einer Art von Empfangsendgerät, einer Art von Kommunikation mit dem Empfangsendgerät, einer Art von Konnektivität mit dem Empfangsendgerät und/oder einer Adresse oder einem Zugangsnetz, das von dem Empfangsendgerät verwendet wird, um die Sendevorrichtung zu kontaktieren, um die Kommunikation zu erstellen, ausgewählt ist,
- Mittel zum Einfügen von mindestens einer bestimmten Nutzungsregel in eine Verhandlungsnachricht der Parameter des Datenflusses der Kommunikation, wobei die Nachricht dazu bestimmt ist, an das Empfangsendgerät übertragen zu werden,
wobei die Mittel zum Bestimmen und zum Einfügen dazu bestimmt sind, während einer Verhandlung der Parameter des Datenflusses der Kommunikation aktiviert zu werden.

9. System, umfassend:
- eine Sendevorrichtung und
- ein Empfangsendgerät,
wobei die Sendevorrichtung nach Anspruch 8 ist und geeignet ist, die Verwendung eines Datenflusses zu steuern, der während einer Kommunikation übertragen wird, die zwischen dieser Sendevorrichtung und diesem Empfangsendgerät erstellt ist, und das Empfangsendgerät aufweist:
- Mittel zum Extrahieren aus einer Verhandlungsnachricht der Parameter eines Datenflusses der Kommunikation, wobei die Verhandlungsnachricht von der Sendevorrichtung empfangen wird, von mindestens einer Nutzungsregel durch das Empfangsendgerät des Datenflusses der Kommunikation, wobei die Mittel zum Extrahieren dazu bestimmt sind, während einer Verhandlung der Parameter des Datenflusses der Kommunikation zwischen der Sendevorrichtung und dem Empfangsendgerät aktiviert zu werden, und
- Mittel zum Verarbeiten des Datenflusses der Kommunikation gemäß der extrahieren Nutzungsregel, wobei die Mittel zum Verarbeiten dazu bestimmt sind, während der Kommunikation zwischen der Sendevorrichtung und dem Empfangsendgerät aktiviert zu werden.

10. Endgerät, umfassend eine Vorrichtung nach Anspruch 8.

11. Server, umfassend eine Vorrichtung nach Anspruch 8.

12. Computerprogramm, das Programmcodeanweisungen zum Ausführen der Schritte des Verfahrens nach einem der Ansprüche 1 bis 4 oder der Schritte des Verfahrens zur Kommunikation nach einem der Ansprüche 5 bis 7 aufweist, wenn das Programm von einem Prozessor ausgeführt wird.

## Claims

1. Method for controlling the use of a data stream transmitted during a communication that is set up between at least one transmitter device (15, 13) and a recipient terminal (12, 15), **characterized in that** in the course of a phase of negotiation of the parameters of the data stream of the communication, the method comprises:
- a step of automatic determination (E2) of at least one rule of use by the recipient terminal of the data stream of the communication, according to the recipient terminal and at least one criterion chosen from among a history of communication with the recipient terminal, a link to the recipient terminal, a type of recipient terminal, a type of communication with the recipient terminal, a type of connectivity with the recipient terminal, and/or according to an address or an access network used by the recipient terminal to reach the transmitter device so as to set up the communication;
- a step of insertion (E3) of the at least one determined rule of use into a message for negotiation of the parameters of the data stream of the communication, the message being intended to be transmitted to the recipient terminal (12, 15).

2. Method according to Claim 1, **characterized in that** it comprises the insertion (E4) of at least one parameter associated with the rule of use into the message for negotiation of the parameters of the data stream of the communication.

3. Method according to Claim 1 or 2, in which said at least one rule of use comprises an action carried out in the course of the communication from among reading of the stream, local recording of the stream or external recording of the stream by the recipient terminal.

4. Method according to Claim 3, in which said at least one rule of use comprises an action carried out on the stream after recording thereof from among modification of the stream, sharing of the stream or transfer of the stream to another recipient.

5. Method for communication between at least one transmitter device (15, 13) and a recipient terminal (12), the method comprising a phase of negotiation of the parameters of a data stream of the communication, in the course of which a message for negotiation of the parameters of the data stream is received (E5) from the transmitter device, said negotiation message comprising at least one rule of use by the recipient terminal of the data stream of the communication inserted by the transmitter device in accordance with a control method according to any one of Claims 1 to 4, the method for communication is **characterized in that** it comprises:
- a step of extraction (E8), from said received negotiation message, of said at least one rule of use by the recipient terminal of the data stream of the communication,
- during a phase of communication between the transmitter device and the recipient terminal, a step of processing (E16) of the data stream of the communication according to the extracted rule of use.

6. Method for communication according to Claim 5, **characterized in that** it comprises:
∘ according to one extracted rule of use, a step of recording (E16) of the received data stream,
∘ and a step of insertion (E17) of an identifier relating to the transmitter device or to the user of the transmitter device into a file containing the recorded data stream.

7. Method for communication according to either of Claims 5 and 6, **characterized in that** it comprises:
∘ according to a first extracted rule of use, a step of recording (E16) of the received data stream,
∘ according to a second extracted rule of use, a step of insertion (E18) of an identifier relating to a terminal that is authorized or to the user of a terminal that is authorized to access the recorded data stream into a file containing the recorded data stream.

8. Device for controlling the use of a data stream transmitted during a communication that is set up between at least the device and a recipient terminal, **characterized in that** it comprises:
means for automatically determining at least one rule of use by the recipient terminal of the data stream of the communication according to the recipient terminal and at least one criterion chosen from among a history of communication with the recipient terminal, a link to the recipient terminal, a type of recipient terminal, a type of communication with the recipient terminal, a type of connectivity with the recipient terminal, and/or according to an address or an access network used by the recipient terminal to reach the transmitter device so as to set up the communication,
- means for inserting at least one determined rule of use into a negotiation message for the parameters of the data stream of the communication, the message being intended to be transmitted to the recipient terminal,
said determination and insertion means being intended to be activated in the course of negotiation of the parameters of the data stream of the communication.

9. System comprising:
a transmitter device; and
a recipient terminal;
in which said transmitter device is in accordance with Claim 8 and capable of controlling the use of a data stream transmitted at the time of a communication set up between this transmitter device and the recipient terminal, and the recipient terminal comprises:
- means for extracting at least one rule of use by the recipient terminal of the data stream of the communication from a message for negotiation of the parameters of a data stream of the communication, said negotiation message being received from the transmitter device, said extraction means being intended to be activated in the course of negotiation of the parameters of the data stream of the communication between the transmitter device and the recipient terminal, and
- means for processing the data stream of the communication according to the extracted rule of use, said processing means being intended to be activated in the course of communication between the transmitter device and the recipient terminal.

10. Terminal comprising a device according to Claim 8.

11. Server comprising a device according to Claim 8.

12. Computer program having program code instructions for executing the steps of the method according to any one of Claims 1 to 4 or the steps of the method for communication according to any one of Claims 5 to 7 when the program is executed by a processor.
